Europäisches Patentamt

European Patent Office

Office européen des brevets

(19)

(11) Veröffentlichungsnummer: **0 379 108**

**A1**

(12) **EUROPÄISCHE PATENTANMELDUNG**

(21) Anmeldenummer: 90100695.7

(51) Int. Cl.⁵: **F01K 23/06, F02C 3/28**

(22) Anmeldetag: 13.01.90

(30) Priorität: 19.01.89 DE 3901451

(43) Veröffentlichungstag der Anmeldung:
25.07.90 Patentblatt 90/30

(84) Benannte Vertragsstaaten:
**AT DE ES GB GR IT NL SE**

(71) Anmelder: **Asea Brown Boveri**
**Aktiengesellschaft**
**Kallstadter Strasse 1**
**D-6800 Mannheim 31(DE)**

(72) Erfinder: **Michel, Hartmut, Dr.**
**Im Vogelskorb 7**
**D-6803 Edingen-Neckarhausen(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Verfahren zum Erzeugen elektrischer Energie in einer kombinierten Gasturbinen-Dampfkraftanlage mit zugeordneter Brennstoffvergasungsanlage sowie Anlage zur Durchführung des Verfahrens.**

(57) In einer bekannten Gasturbinen-Dampfkraftwerkanlage mit zugeordneter Brennstoffvergasungsanlage (38) arbeitet der Dampfturbinenkraftwerksteil (12) nach dem Zweidruckverfahren, wobei für die Hochdruck- und Niederdruckdampferzeugung aus Speisewasser Wärmetauscher vorgesehen sind, die die fühlbare Wärme von Brenngas (36) ausnutzen, das in einem Brennstoffvergaser (37) der Brennstoffvergasungsanlage (38) erzeugt wird. Zusätzlich ist noch ein Hochdruckdampferzeuger in einem der Gasturbine (16) gasseitig nachgeschalteten Abhitzekessel (30) vorgesehen. Diese Schaltungsanordnung erfordert hohen Aufwand und ist trotzdem nicht in der Lage, die zur Verfügung stehende Abwärme optimal auszunutzen mit dem Ziel einer Steigerung des Wirkungsgrades.

Erfindungsgemäß wird daher die Verdampfung des Speisewassers duch die fühlbare Wärme des Brenngases (36), die Speisewaservorwärmung (90) sowie die Dampfüberhitzung (54) dagegen durch die Abwärme der Gasturbine (16) vorgenommen.

EP 0 379 108 A1

## Verfahren zum Erzeugen elektrischer Energie in einer kombinierten Gasturbinen-Dampfkraftanlage mit zugeordneter Brennstoffvergasungsanlage sowie Anlage zur Durchführung des Verfahrens

Die Erfindung betrifft ein verfahren zum Erzeugen elektrischer Energie mit einer kombinierten Gasturbinen-Dampfkraftanlage mit zugeordneter Brennstoffvergasungsanlage, bei der der Gasturbinenkraftwerksteil von der Brennstoffvergasungsanlage mit Brenngas beliefert wird und der Dampfturbinenkraftwerksteil mit Dampf versorgt wird, der unter Ausnutzung der fühlbaren Wärme des in der Brennstoffvergasungsanlage erzeugten Brenngases (fühlbare Brenngaswärme) sowie der Abwärme der Gasturbine aus Speisewasser gewonnen wird. Außerdem betrifft die Erfindung eine kombinierte Gasturbinen-Dampfkraftanlage mit zugeordneter Brennstoffvergasungsanlage zur Durchführung des Verfahrens.

Bei einem bekannten Verfahren dieser Art wird im Dampfturbinenkraftwerksteil die Dampferzeugung im Zweidruckverfahren durchgeführt (DE 33 19 711 A1). Der Dampfturbinenkraftwersteil umfaßt hierzu einen Hochdruckdampferzeuger, der die Hochdruckstufe der Dampfturbine mit Hochdruckdampf versorgt, sowie einen Niederdruckdampferzeuger, der Niederdruckdampf an die Niederdruckstufe abgibt, wobei beide Dampferzeuger durch die fühlbare Wärme des gelieferten rohen Brenngases beheizt werden. Gleichzeitig wird noch weiterer Hochdruckdampf in einem vom Abgas der Gasturbine beaufschlagten Abhitzekessel erzeugt und ebenfalls der Hochdruckstufe der Dampfturbine zugeführt. Hierbei erfolgt die Vorwärmung und die Verdampfung des Speisewassers sowie die sich anschließende Dampfüberhitzung jeweils im Hochdruckdampferzeuger und im Abhitzekessel. Hierdurch wird die in der Gesamtanlage anfallende Abwärme nicht optimal ausgenutzt, so daß der Wirkungsgrad der Anlage zu wünschen übrig läßt.

Der Erfindung liegt daher die Aufgabe zugrunde, ein Verfahren bzw. eine Anlage der eingangs genannten Art anzugeben, das durch bessere Ausnutzung der anfallenden Wärme den Wirkungsgrad der Anlage steigert. Darüber hinaus soll das Verfahren einfach durchzuführen und an verschiedene Betriebsbedingungen leicht anpaßbar sein.

Die Lösung dieser Aufgabe besteht erfindungsgemäß darin, daß die Verdampfung des Speisewassers durch die fühlbare Brenngaswärme, die Speisewasservorwärmung sowie die Dampfüberhitzung dagegen durch die Abwärme der Gasturbine erfolgt. Hierdurch wird eine optimale Anpassung des Wärmebedarfs der Dampferzeugung an die in der Anlage anfallende Abwärme erreicht mit dem Ergebnis einer weitgehenden Ausnutzung dieses Abwärmeangebots bei sehr hohem Frischdampfdruck und damit bei einem entsprechend hohen Wirkungsgrad.

Für die Erreichung dieses hohen Wirkungsgrades empfiehlt es sich, daß das Speisewasser zumindest weitgehend, vorzugsweise vollständig, durch die fühlbare Brenngaswärme verdampft wird. Die Verdampfung soll also, zumindest während des Betriebs der Gasturbinen-Dampfkraftanlage im Vollastbereich, vollständig durch die fühlbare Brenngaswärme erreicht werden. Das schließt jedoch nicht aus, daß insbesondere im Teillastbetrieb auch ein Teil der Abwärme der Gasturbine für die Dampferzeugung mit herangezogen wird. Dieser Teil der Abwärme soll jedoch maximal 20 % des Speisewassermassenstromes verdampfen, damit der Wirkungsgrad des Kraftwerks nicht zu sehr abfällt.

Wird der Dampf im Dampfturbinenkraftwerksteil mehrstufig entspannt, so besteht eine bevorzugte Weiterbildung der Erfindung darin, daß der Dampf zwischen den einzelnen Stufen durch die Abwärme der Gasturbine zwischenüberhitzt wird. Hierdurch wird eine weitere Optimierung des Betriebes erreicht.

Eine vorteilhafte Ausgestaltung einer kombinierten Gasturbinen-Dampfkraftanlage mit zugeordneter Brennstoffvergasungsanlage, deren Gasturbinenkraftwerksteil mindestens einen von der Brennstoffvergasungsanlage mit Brenngas versorgte Brennkammer aufweist, und deren Dampfturbinenkraftwerksteil eine Dampfturbine, mindestens einen dem Kohlevergaser der Brennstoffvergasungsanlage gasseitig nachgeschalteten Hochdruckwärmetauscher für die Erzeugung von Dampf, der dampfseitig mit der Dampfturbine verbunden ist, sowie mindestens einen vom Abgas der Gasturbine beaufschlagten Abhitzekessel aufweist, ist dadurch gekennzeichnet, daß der Hochdruckwärmetauscher als Verdampfer ausgebildet und eingesetzt ist, der dampfseitig über mindestens einen im Abhitze kessel vorgesehenen Dampfüberhitzer an die Dampfturbine und speisewasserseitig über mindestens einem im Abhitzekessel vorgesehenen Speisewasservorwärmer an eine Speisewasserversorgungsanlage angeschlossen ist. Diese Anlage erreicht bei einfachem Aufbau einen hohen Betriebswirkungsgrad und ist den Belastungen des Betriebs voll gewachsen.

Zweckmäßig wird die Verdampfung im Hochdruckwärmetauscher nach dem Zwangsumlaufverfahren durchgeführt, wozu vorteilhaft der Hochdruckwärmetauscher durch Rohrleitungen mit eingefügter Umlaufpumpe mit einer Dampfabscheidetrommel verbunden ist, an die der Dampfüberhitzer und der Speisewasservorwärmer angeschlossen sind.

Weitere Vorteile und Merkmale der Erfindung gehen aus der folgenden Beschreibung eines Ausführungsbeispieles im Zusammenhang mit der schematischen Zeichnung hervor, die das sehr vereinfachte Schaltschema einer kombinierten Gasturbinen-Dampfkraftwerkanlage mit zugeordneter Brennstoffvergasungsanlage gemäß der Erfindung zeigt.

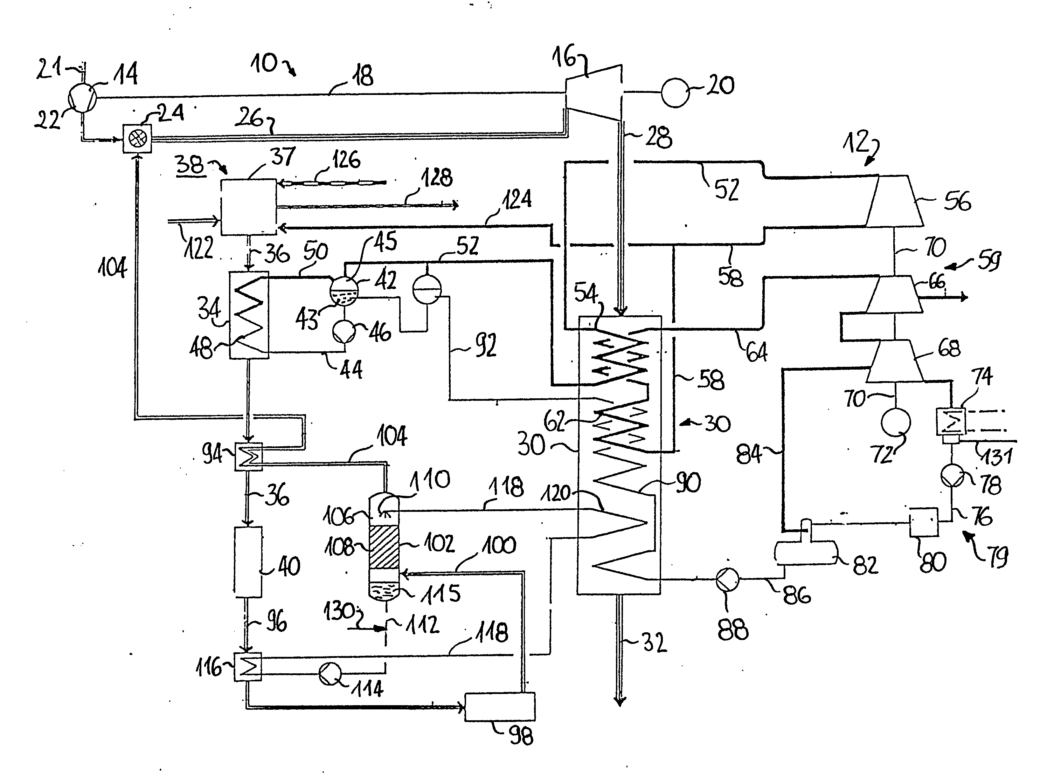

Die kombinierte Gasturbinen-Dampfkraftwerk-Brennstoffvergasungsanlage gemäß der Zeichnung weist einen Gasturbinenkraftwerksteil 10 und einen Dampfturbinenkraftwerksteil 12 auf. Der Gasturbinenkraftwerksteil 10 besitzt einen Luftverdichter 14, der zusammen mit der Gasturbine 16 eine gemeinsame Welle 18 aufweist, die einen elektrischen Generator 20 antreibt. Die Ansaugleitung 21 des Luftverdichters 14 führt, ggf. unter Zwischenschaltung von Luftfiltern, in den Außenraum, die Druckleitung 22 dagegen zur Brennkammer 24. Die Brennkammer selbst ist durch die Arbeitsgasleitung 26 mit dem gasseitigen Eingang der Gasturbine 16 verbunden, deren Ausgang durch die Leitung 28 mit dem oberen Ende des stehenden Abhitzekessels 30 verbunden ist. An das untere Ende des Abhitzekessels ist gasseitig eine Abgasleitung 32 angeschlossen, die zu einem nicht dargestellten Kamin führt.

Der Dampfturbinenkraftwerksteil 12 weist einen Hochdruckwärmetauscher 34 auf, der gasseitig in die Leitung 36 für rohes Brenngas eingefügt ist, die vom Brennstoffvergaser 37 der Brennstoffvergasungsanlage 38 zu einem Gaswäscher 40 führt, wobei der Hochdruckwärmetauscher dem Brennstoffvergaser gasseitig unmittelbar nachgeschaltet ist. Zur Verdampfung des Speisewassers arbeitet der Hochdruckwärmetauscher 34 nach dem Zwangsumlaufprinzip. Hierzu ist eine Dampfabscheidetrommel 42 vorgesehen, deren unterer Bereich durch eine Leitung 44 mit eingefügter Umlaufpumpe 46 mit dem einen Ende des Hochdruckwärmetauschers 34 verbunden ist. Das andere obere Ende des Hochdruckwärmetauschers ist durch eine Leitung 50 mit dem oberen Bereich der Dampfabscheidetrommel 42 verbunden.

Vom oberen Bereich der Dampfabscheidetrommel 42 führt eine Hochdruckdampfleitung 52 zunächst zum Eingang des Dampfüberhitzers 54, der im Abhitzekessel 30 angeordnet ist, und dann vom Ausgang des Dampfüberhitzers zur Hochdruckstufe 56 der dreistufigen Dampfturbine 59. Der Dampfüberhitzer 54 ist im heißesten Bereich des Abhitzekessels 30, d. h. im Bereich der Einmündungsstelle der von der Gasturbine kommenden Leitung 28, angeordnet. Der Ausgang der Hochdruckstufe 56 ist dampfseitig durch die Leitung 58 mit dem Eingang des Dampfzwischenüberhitzers 62 verbunden, der ebenfalls im Abhitzekessel 30 angeordnet ist, und zwar ebenfalls in der Nähe der Ausmündung der Leitung 28. Der Ausgang des Dampfzwischenüberhitzers 62 ist durch die Leitung 64 mit dem Eingang einer Niederdruckstufe 66 der Dampfturbine 59 verbunden. Der Ausgang dieser Niederdruckstufe ist dampfseitig an den Eingang einer weiteren Niederdruckstufe 68 der Dampfturbine angeschlossen. Die Wellen sämtlicher Stufen der Dampfturbine sind zu einer gemeinsamen Welle 70 verbunden, welche einen elektrischen Generator 72 antreibt.

Der Ausgang der weiteren Niederdruckstufe 68 ist dampfseitig an einen Dampfkondensator 74 angeschlossen, der Bestandteil der Speisewasserversorgungsanlage 79 ist und dessen Ausgang mit einer Einspeiseleitung 131 für Ergänzungswasser verbunden ist. Durch eine Kondensatleitung 76 mit eingefügter Pumpe 78 und eingefügtem Wasseraufbereiter 80 ist der Dampfkondensator mit einem Kondensatsammelbehälter 82 verbunden. Von einer Anzapfung der weiteren Niederdruckstufe 68 führt noch eine Dampfleitung 84 zum Kondensatsammelbehälter 82.

Vom unteren Bereich des Kondensatsammelbehälters 82 führt eine Speiseleitung 86 mit eingefügter Speisewasserpumpe 88 zum Eingang des Speisewasservorwärmers 90, der im Abhitzekessel 30 angeordnet ist. Der Speisewasservorwärmer 90 erstreckt sich innerhalb des Abhitzekessels 30 vom Anschlußbereich der Abgasleitung 32 bis ungefähr in die obere Hälfte des stehenden Abhitzekessels. Der Ausgang des Speisewasservorwärmers 90 ist durch die Leitung 92 mit dem unteren Bereich der Dampfabscheidetrommel 42 des Hochdruckwärmetauschers 34 verbunden.

Der Hochdruckwärmetauscher 34, der Dampfüberhitzer 54, der Dampfzwischenüberhitzer 62, der Speisewasservorwärmer 90 sind jeweils als Wärmetauscher ausgebildet, die im Gegenstrom arbeiten.

In die Leitung 36 für rohes Brenngas ist zwischen den Hochdruckwärmetauscher 34 und den Gaswäscher 40 ein Wärmetauscher 94 für rohes/reines Brenngas eingefügt, der ebenfalls im Gegenstrom arbeitet.

Der gasseitige Ausgang des Gaswäscher 40 ist durch die Leitung 96 mit einem Gasentschwefler 98 verbunden. Während das vom Brennstoffvergaser 37 erzeugte Gas bis zum Austritt aus dem Gasentschwefler als rohes Brenngas bezeichnet wird, wird dieses nach dem Austritt aus dem Gasentschwefler 98 als reines Brenngas bezeichnet.

Der Ausgang des Gasentschweflers 98 ist durch die Reingasleitung 100 mit dem unteren Bereich des stehenden Brenngasbefeuchters 102 verbunden. Vom oberen Bereich des Brenngasbefeuchters 102 führt die Reingasleitung 104 zur Brennkammer 24, wobei in die Reingasleitung 104 der Wärmetauscher 94 für rohes/reines Brenngas eingefügt ist.

Der Brenngasbefeuchter 102 weist einen Behälter auf, in dem ein stehender zylindrischer Befeuchtungsraum 106 angeordnet ist. Im mittleren Höhenbereich des Befeuchtungsraums 106 ist eine Schicht 108 von Rieselkörpern, z. B. in Form von Raschigringen, angeordnet, unterhalb derer die Reingasleitung 100 einmündet. Oberhalb der Schicht 108 ist mindestens eine Sprühdüse 110 im Befeuchtungsraum angeordnet, deren Sprührichtung auf die Schicht 108 ausgerichtet ist. Die Dicke der Schicht beträgt ungefähr das 1 bis 3-fache des Durchmessers des Befeuchtungsraumes.

Vom tiefsten Punkt des Befeuchtungsraums unterhalb der Schicht 108 führt eine Wasserleitung 112 mit eingefügter Umwälzpumpe 114 zum Eingang eines Wärmetauschers 116, der in der Leitung 96 angeordnet und gasseitig dem Gaswäscher 40 nachgeschaltet ist. Der Ausgang des Wärmetauschers 116 ist durch die Wasserleitung 118 mit der Sprühdüse 110 verbunden, wobei in die Wasserleitung 118 ein weiterer Wärmetauscher 120 eingeschaltet ist. Dieser weitere Wärmetauscher 120 befindet sich ebenfalls im Abhitzekessel 30, und zwar im unteren Bereich in der Nähe des Anschlusses der Abgasleitung 32. Die Wärmeübertragung in den Wärmetauschern 116 und 120 erfolgt im Gegenstrom. Das für die Befeuchtung erforderliche Wasser wird durch die Leitung 130 der Anlage zugeführt.

An den Brennstoffvergaser 37 sind noch folgende Leitungen angeschlossen: Eine Leitung 122 für die Zufuhr von Luft oder Sauerstoff, eine Leitung 124, die zur Leitung 58 führt, eine Leitung 126 für die Zufuhr von Brennstoff sowie eine Leitung 128 für die Abfuhr der Vergasungsrückstände.

Während des Betriebs der kombinierten Gesamtanlage wird im Brennstoffvergaser 37 der Brennstoffvergasungsanlage 38 der durch die Leitung 126 zugeführte fossile Brennstoff, zweckmäßig Kohle oder Öl, vergast. Hierzu wird durch die Leitung 122 Luft oder Sauerstoff und durch die Leitung 124 Dampf als Vergasungsmittel zugeführt, wobei dieser Dampf der Leitung 58 entnommen wird. Die Vergasungsrückstände werden durch die Leitung 128 aus dem Brennstoffvergaser 37 abgeführt.

Das entstandene rohe Brenngas wird aus dem Brennstoffvergaser 37 durch die Leitung 36 für rohes Brenngas abgezogen und zunächst zum Hochdruckwärmetauscher 34 geleitet. Hier wird das heiße, rohe Brenngas unter Verdampfung des zugeführten, vorgewärmten Speisewassers von ungefähr 900° Celsius auf ungefähr 370° Celsius abgekühlt. Mit dieser Temperatur tritt das rohe Brenngas dann in den Wärmetauscher 94 für rohes/reines Brenngas ein, wird auf ungefähr 200° Celsius abgekühlt und strömt mit dieser Temperatur zum Gaswäscher 40. Das aus dem Gaswäscher 40 mit einer Temperatur von ungefähr 120° Celsius austretende rohe Brenngas wird dann durch die Leitung 96 dem Wärmetauscher 116 zugeführt, wo es unter Wärmeabgabe an das Wasser des Brenngasbefeuchters 102° auf ungefähr 90° Celsius abgekühlt wird. Anschließend wird das Brenngas in einem nicht dargestellten Kühler vorzugsweise durch Kühlwasser auf 40° Celsius abgekühlt. Mit dieser Temperatur tritt das rohe Brenngas in den Gasentschwefler 98 ein, verläßt diesen als reines Brenngas mit einer Temperatur von ungefähr 40° Celsius und wird dann durch die Reingasleitung 100 in den unteren Bereich des Brenngasbefeuchters 102 eingeleitet.

Da die Umwälzpumpe 114 in Betrieb ist, wird aus dem Wassersammelraum 115, der sich im unteren Bereich des Befeuchtungsraum 106 ausbildet, Wasser abgesaugt, im Wärmetauscher 116 vorgewärmt und dann durch die Wasserleitung 118 dem weiteren Wärmetauscher 120 zugeführt. Hier wird das vorgewärmte Wasser auf ungefähr 150° Celsius nachgewärmt und dann durch die Wasserleitung 118 der Sprühdüse 110 zugeführt. Das von der Sprühdüse feinzerstäubte Wasser benetzt die Rieselkörper der Schicht 108 und das überschüssige Wasser tropft von der Schicht 108 in den Wassersammelraum 115, so daß der Befeuchtungswasserkreislauf geschlossen ist. Das bei der Befeuchtung verbrauchte Wasser wird durch Frischwasser ergänzt. Die Zufuhr erfolgt auf der Saugseite der Pumpe 114 durch die Leitung 130.

Während dieses Vorganges durchströmt das reine Brenngas die in der Schicht 108 angeordneten Rieselkörper unter Erwärmung und Befeuchtung im Gegenstrom von unten nach oben und sammelt sich im oberen Endbereich des Befeuchtungsraums 106. Von hier wird das reine und befeuchtete Brenngas durch die Reingasleitung 104 abgezogen, durch den Wärmetauscher 94 für rohes/reines Brenngas geführt und dann zur Brennkammer 24 der Gasturbine geleitet.

In der Brennkammer 24 wird das reine Brenngas mit Hilfe von Luft, die durch den Verdichter der Brennkammer 24 zugeführt wird, verbrannt. Hierbei bewirkt die vom Brenngas mitgeführte Feuchte eine Senkung der Verbrennungstemperatur, wodurch der $NO_X$-Bildung entgegengewirkt wird. Das in der Brennkammer erzeugte Arbeitsgas wird dann von der Brennkammer 24 durch die Arbeitsgasleitung 26 der Gasturbine 16 zugeführt und hier entspannt. Da durch die mitgeführte Feuchte der Massenstrom des Brenngases und somit auch der Massenstrom des Arbeitsgases erhöht ist, wird die Leistungsabgabe der Gasturbine vergrößert. Mit der in der Gasturbine gewonnenen Energie wird durch die Welle 18 sowohl der Luftverdichter 14 als auch der elektrischer Generator 20 angetrieben.

Nach der Entspannung in der Gasturbine 16 strömt das Arbeitsgas als Abgas durch die Leitung 28 dem oberen Ende des Abhitzekessels 30 mit einer Temperatur von ungefähr 500° Celsius zu. Während der Durchströmung des Abhitzekessels wird dieses auf ungefähr 100° Celsius abgekühlt und tritt mit dieser Temperatur als Abgas in die Abgasleitung 32 ein, von der es im nicht dargestellten Kamin zugeleitet wird.

Vom Kondensatsammelbehälter 82 wird mit Hilfe der Speisewasserpumpe 88 durch die Speiseleitung 86 Speisewasser entnommen und dem Speisewasservorwärmer 90 zugeführt. Nach der Vorwärmung des Speisewassers wird dieses durch die Leitung 92 in den unteren Bereich der Dampfabscheidetrommel 42 eingeführt, so daß dort ungefähr die untere Hälfte der Trommel mit Speisewasser gefüllt ist und demnach als Wasserraum 43 dient. Vom Wasserraum 43 wird durch die Umlaufpumpe 46 Speisewasser entnommen und durch die Leitung 42 dem Hochdruckwärmetauscher 34 zugeführt. Hier strömt das Speisewasser im Gegenstrom zum rohen Brenngas und wird hierbei zumindest teilweise verdampft. Das Wasser-Dampfgemisch wird dem Hochdruckwärmetauscher 34 durch die Leitung 50 entnommen und dem über dem Wasserraum 43 angeordneten Dampfraum 45 der Dampfabscheidetrommel zugeleitet. Hier trennt sich Dampf und Wasser, das Wasser strömt zum Wasserraum 43, wogegen der Hochdruckdampf durch die Hochdruckdampfleitung 42 entnommen, durch den Dampfüberhitzer 54 geführt und schließlich der Hochdruckstufe 56 der Dampfturbine 59 zugeleitet wird.

In der Hochdruckstufe 56 wird der Hochdruckdampf teilweise entspannt, strömt dann durch die Leitung 58 dem Dampfzwischenüberhitzer 62 zu, wird hier nochmals überhitzt und dann durch die Leitung 64 der zweiten Stufe 66 der Dampfturbine 59 zugeführt. Hier wird der Dampf unter Arbeitsleistung weiter entspannt und der dritten Stufe 68 zugeleitet. Nach dem Austritt aus dieser Stufe wird der Dampf dem Dampfkondensator 74 zugeführt und das entstehende Kondensat wird durch die Pumpe 78 durch den Wasseraufbereiter 80 evtl. über einen ND-Vorwärmer in den Kondensatsammelbehälter 82 gefördert. Über eine mit einer nicht dargestellten Vollentsalzungsanlage verbundene Leitung 131 wird Ergänzungswasser zugeführt. Dieser Kondensatsammelbehälter ist dampfseitig durch die Dampfleitung 84 mit einer Anzapfung der dritten Stufe 68 der Dampfturbine 59 verbunden und somit durch Anzapfdampf beheizt.

Für den Betrieb des Dampfturbinenkraftwerksteils 12 im Sinne vorliegender Erfindung ist es wesentlich, daß die Verdampfung des Speisewassers möglichst nur im Hochdruckwärmetauscher 34 unter Abkühlung des Brenngases durchgeführt und der Hochdruckwärmetauscher somit weitgehend nur als Verdampfer eingesetzt wird. Die für den Betrieb weiterhin erforderliche Wärme, insbesondere für Dampfüberhitzung, Dampfzwischenüberhitzung, Speisewasservorwärmung und Vorwärmung des Befeuchtungswassers, wird dem Abgas der Gasturbine im Abhitzekessel entnommen. Diese Aufteilung gilt zumindest im Bereich des Vollastbetriebs. Jedoch ist es, insbesondere im Teillastbetrieb der Anlage, zulässig und oft nicht zu umgehen, daß auch im Dampfüberhitzer und/oder im Speisewasservorwärmer ein Teil des Speisewassers verdampft wird. Dieser Teil sollte jedoch nicht mehr als 20% des in der Zeiteinheit dem Speisewasservorwärmer zugeführten Speisewassermassenstromes betragen, da ansonsten die mit vorliegender Erfindung erzielbare Wirkungsgradverbesserung hinter dem maximal erreichbaren Wert zurückbleibt.

## Ansprüche

1. Verfahren zum Erzeugen elektrischer Energie mit einer kombinierten Gasturbinen-Dampfkraftanlage mit zugeordneter Brennstoffvergasungsanlage, bei der der Gasturbinenkraftwerksteil (10) von der Brennstoffvergasungsanlage (38) mit Brenngas beliefert wird und der Dampfturbinenkraftwerksteil (12) mit Dampf versorgt wird, der unter Ausnutzung der fühlbaren Wärme des in der Brennstoffvergasungsanlage (38) erzeugten Brenngases (fühlbare Brenngaswärme) sowie der Abwärme der Gasturbine (16) aus Speisewasser gewonnen wird, dadurch gekennzeichnet, daß die Verdampfung des Speisewassers zumindest teilweise, vorzugsweise vollständig, durch die fühlbare Brenngaswärme, die Speisewasservorwärmung sowie die Dampfüberhitzung dagegen durch die Abwärme der Gasturbine (16) erfolgt.

2. Verfahren nach Anspruch 1 oder 2 mit einer mehrstufigen Entspannung des Dampfes in einer Turbine des Dampfturbinenkraftwerksteils, dadurch gekennzeichnet, daß der Dampf zwischen den einzelnen Stufen (56,66) durch die Abwärme der Gasturbine (16) zwischenüberhitzt wird.

3. Kombinierte Gasturbinen-Dampfkraftanlage mit zugeordneter Brennstoffvergasungsanlage zur Durchführung des Verfahrens nach Anspruch 1, wobei der Gasturbinenkraftwerksteil (10) mindestens eine von der Brennstoffvergasungsanlage (38) mit Brenngas versorgte Brennkammer (24) aufweist und wobei der Dampfturbinenkraftwerksteil (12) mindestens eine Dampfturbine (59) und mindestens einen dem Brennstoffvergaser (37) der Brennstoffvergasungsanlage (38) gasseitig nachgeschalteten und für die Erzeugung von Dampf vorgesehenen Hochdruckwärmetauscher (34) besitzt, der dampfseitig mit der Dampfturbine (59) verbunden ist, sowie mit mindestens einem vom Abgas der Gasturbine (16) beaufschlagten Abhitzekessel (30), dadurch gekennzeichnet, daß der Hochdruckwärmetauscher (34) als Verdampfer ausgebildet und eingesetzt ist, der dampfseitig über mindestens einen im Abhitzekessel (30) vorgesehenen Dampfüberhitzer (54) an die Dampfturbine (59) und speisewasserseitig über mindestens einen im Abhitzekessel (30) vorgesehenen Speisewasservorwärmer (90) an eine Speisewasserversorgungsanlage (79) angeschlossen ist.

4. Anlage nach Anspruch 4, dadurch gekennzeichnet, daß der Hochdruckwärmetauscher (34) durch Rohrleitungen (44,50) mit eingefügter Umlaufpumpe (46) mit einer Dampfabscheidetrommel (42) verbunden ist, an die der Dampfüberhitzer (54) und der Speisewasservorwärmer (90) angeschlossen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-129167 (HITACHI)<br>* Zusammenfassung *<br>* Seite 16, Zeile 17 – Seite 18, Zeile 25; Figur 7 *<br>--- | 1-4 | F01K23/06<br>F02C3/28 |
| X | CH-A-668290 (SULZER)<br>* Zusammenfassung; Figur 1 *<br>--- | 1, 3 | |
| X | PATENT ABSTRACTS OF JAPAN<br>vol. 10, no. 346 (M-537)(2402) 21 November 1986,<br>& JP-A-61 145322 (TOSHIBA) 03 Juli 1986,<br>* das ganze Dokument *<br>--- | 1, 3 | |
| A | PATENT ABSTRACTS OF JAPAN<br>vol. 8, no. 61 (M-284)(1498) 23 April 1984,<br>& JP-A-58 211511 (HITACHI) 09 Dezember 1983,<br>* das ganze Dokument *<br>--- | 1-3 | |
| A | US-A-4288979 (LILJEDAHL)<br>--- | | |
| A | EP-A-209044 (KRAFTWERK UNION)<br>----- | | RECHERCHIERTE SACHGEBIETE (Int. Cl.5 )<br><br>F01K<br>F02C |

Der vorliegende Recherchenbericht wurde für alle Patentansprüche erstellt

| Recherchenort | Abschlußdatum der Recherche | Prüfer |
|---|---|---|
| DEN HAAG | 12 APRIL 1990 | ERNST J.L. |